# EUROPEAN PATENT SPECIFICATION

(11) **EP 3 425 580 B1**
(45) Date of publication and mention of the grant of the patent: **08.04.2026**
(21) Application number: 18191326.0
(22) Date of filing: 04.05.2010
(51) Int. Cl.: G06Q 30/00, G06Q 30/02

(54) **ON-LINE ADVERTISEMENT**
ONLINE-WERBUNG
PUBLICITÉ EN LIGNE

(43) Date of publication of application: 09.01.2019
(62) Divisional of application: 10161916.1
(73) Proprietor: Malikie Innovations Limited, Dun Laoghaire, Dublin A96 VR66 (IE)
(72) Inventor: GARG, Neeraj, Waterloo, Ontario N2L 5Z5 (CA)
(74) Representative: Murgitroyd & Company

(56) References cited:
- EP-A1- 1 220 552
- EP-A2- 1 043 905
- US-A1- 2004 039 638
- US-A1- 2005 227 679
- US-A1- 2006 235 938
- US-A1- 2009 271 261

## Description

### FIELD OF THE TECHNOLOGY

The technology disclosed herein (the "technology") relates to on-line advertising. The technology has specific application in deferring advertisement presentation based on properties of an offer made in the advertisement (the "ad"). Exemplary embodiments are presented in the context of a mobile communications device.

### BACKGROUND

US2004/039638 discloses a method for reducing a service charge of a portable terminal, whereby the user of the portable telephone can set an extraction condition of the advertising information and feedback information from the portable telephone can be returned.

US2009/271261 discloses a system for providing policy driven, user requested, advertising. The system includes a computing device coupled to at least one communications network and adapted to receive user preferences comprising desired advertising content, and specified network access device information for receiving and displaying the advertising thereon. The user preferences are stored in a database and matched to the user preferences with advertising content by at least one advertiser during a specified broadcast event. The advertisements that meet the user preferences are thereafter communicated over the communications network to at least one network access device specified in the user selected preference.

EP1220552 discloses a method for broadcast advertising to a mobile communication device. According to this method, the mobile communication device receives a broadcast advertisement from an advertisement broadcasting system or source, and selects that advertisement based on stored user profile or acceptance data, thereby providing broadcast advertising that is filtered by the communication device.

US2005/227679 discloses a method for advertising in a mobile communication system, including: generating a request for advertisement information, transmitting the request for advertisement information to an advertisement device, wherein the advertisement device stores a plurality of advertisement information, receiving requested advertisement information from the advertisement device, storing the requested advertisement information in a storage device, and presenting selected advertisement information along with notification information indicating an incoming request for connection to a user of a mobile communication device when a request for connection is received by the mobile communication device.

EP1043905 discloses a system for displaying idle content information on wireless computing devices during idle times is disclosed. According to the operation of this system, wireless computing device receives from a wireless network idle content information specified by an address identifier identifying a network resource in the wireless network. When the device determined as being idle, the idle content information is displayed on the device display.

US 2006/235938 discloses a system for determining when to present information to a user based on web page content. The system includes a retriever engine, a display engine, and a parser engine. The retriever engine transmits a domain to a server. In response, the server transmits information to be displayed and in-context rules, which are received by the retriever engine. The parser engine parses the HTML source code of a web page and decides whether to display the information based on the in-context rules. If it is determined that the information should be displayed, the display engine displays the information.

### SUMMARY

The invention is defined in the appended claims.

### BRIEF DESCRIPTION OF THE DRAWINGS

FIG. 1 illustrates a communication system including a mobile communication device to which example embodiments of the technology can be applied.
FIG. 2 illustrates an example online advertisement.
FIG. 3 illustrates an exemplary mobile communication device used in embodiments of the technology.
FIG. 4 illustrates a device, such as in FIG. 3, in detail.
FIG. 5 illustrates methods of the present technology.
FIG. 6 illustrates methods of the present technology.

### DETAILED DESCRIPTION

Reference will now be made in detail to embodiments of the technology. Each example is provided by way of explanation of the technology only, not as a limitation of the technology. It will be apparent to those skilled in the art that various modifications and variations can be made in the present technology without departing from the scope of the technology. For instance, features described as part of one embodiment can be used on another embodiment to yield a still further embodiment. Thus, it is intended that the present technology cover such modifications and variations that come within the scope of the technology.

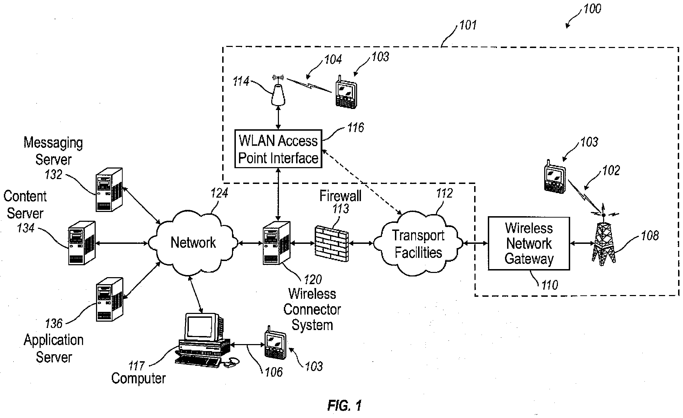

In order to facilitate an understanding of environments in which example embodiments described herein can operate reference is made to FIG. 1 that shows, in block diagram form, a communication system in which embodiments of the technology can be applied. The communication system may comprise a number of mobile communication devices 103 that may be connected to the remainder of system in any of several different ways. Accordingly, several instances of mobile communication devices 103 are depicted in FIG. 1 employing different example ways of connecting to system 100.

These figures are exemplary only, and those persons skilled in the art will appreciate that additional elements and modifications may be necessary to make the communication device, e.g., 103 work in particular network environments. While in the illustrated embodiments, the communication devices, e.g., 103 may comprise smart phones, in other embodiments, however, the communication devices may comprise personal digital assistants (PDA), tablet computers, laptop computers, desktop computers, servers, or other communication devices capable of sending and receiving electronic messages.

Mobile communication devices **103** are connected to a wireless network **101** that may comprise one or more of a Wireless Wide Area Network (WWAN) **102** and a Wireless Local Area Network (WLAN) **104** or other suitable network arrangements. In some embodiments, the mobile communication devices **103** are configured to communicate over both the WWAN **102** and WLAN **104,** and to roam between these networks. In some embodiments, the wireless network **101** may comprise multiple WWANs **102** and WLANs **104.**

The WWAN **102** may be implemented as any suitable wireless access network technology. By way of example, but not limitation, the WWAN **102** may be implemented as a wireless network that includes a number of transceiver base stations **108** where each of the base stations **108** provides wireless Radio Frequency (RF) coverage to a corresponding area or cell. The WWAN **102** is typically operated by a mobile network service provider that provides subscription packages to users of the mobile communication devices **103.** In some embodiments, the WWAN **102** conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), or various other networks. Although WWAN **102** is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN **102** may further comprise a wireless network gateway **110** that connects the mobile communication devices **103** to transport facilities **112,** and through the transport facilities **112** to a wireless connector system **120.** Transport facilities may include one or more private networks or lines, the Internet, a virtual private network, or any other suitable network. The wireless connector system **120** may be operated, for example, by an organization or enterprise such as a corporation, university, or governmental department, which allows access to a network **124** such as an internal or enterprise network (e.g., an intranet) and its resources, or the wireless connector system **120** may be operated by a mobile network provider. In some embodiments, the network **124** may be realized using the Internet rather than or in addition to an internal or enterprise network.

The wireless network gateway **110** provides an interface between the wireless connector system **120** and the WWAN **102,** which facilitates communication between the mobile communication devices **103** and other devices (not shown) connected, directly or indirectly, to the WWAN **102.** Accordingly, communications sent via the mobile communication devices **103** are transported via the WWAN **102** and the wireless network gateway **110** through transport facilities **112** to the wireless connector system **120.** Communications sent from the wireless connector system **120** are received by the wireless network gateway **110** and transported via the WWAN **102** to the mobile communication devices **103.**

The WLAN **104** comprises a wireless network that, in some embodiments, conforms to IEEE 802.11x standards (sometimes referred to as Wi-Fi TM) such as, for example, the IEEE 802.11a, 802.11b and/or 802.11g standard. Other communication protocols may be used for the WLAN **104** in other embodiments such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN **104** includes one or more wireless RF Access Points (AP) **114** (one of which is shown in FIG. 1) that collectively provide a WLAN coverage area.

The WLAN **104** may be a personal network of the user, an enterprise network, or a hotspot offered by an internet service provider (ISP), a mobile network provider, or a property owner in a public or semi-public area, for example. The access points **114** are connected to an access point (AP) interface **116** that may connect to the wireless connector system **120** directly (for example, if the access point **114** is part of an enterprise WLAN **104** in which the wireless connector system **120** resides), or indirectly as indicated by the dashed line in FIG. 1 via the transport facilities **112** if the access point **114** is a personal Wi-Fi network or Wi-Fi hotspot (in which case a mechanism for securely connecting to the wireless connector system **120,** such as a virtual private network (VPN), may be used). The AP interface **116** provides translation and routing services between the access points **114** and the wireless connector system **120** to facilitate communication, directly or indirectly, with the wireless connector system **120.**

The wireless connector system **120** may be implemented as one or more servers, and is typically located behind a firewall **113.** The wireless connector system **120** manages communications, including email, Hypertext Transfer Protocol (HTTP), and HTTP Secure (HTTPS) communications to and from a set of managed mobile communication devices **103.** The wireless connector system **120** also provides administrative control and management capabilities over users and mobile communication devices **103** that may connect to the wireless connector system **120.**

The wireless connector system **120** allows the mobile communication devices **103** to access the network **124** and connected resources and services such as a messaging server **132** (for example, a Microsoft Exchange Server^{®}, IBM Lotus Domino^{®}, or Novell GroupWise^{™} email server), a content server **134** for providing content such as Internet content or content from an organization's internal servers, application servers **136** for implementing server-based applications such as instant messaging (IM) applications to mobile communication devices **103,** and intranet file services.

The wireless connector system **120** typically provides a secure exchange of data (e.g., email messages, personal information manager (PIM) data, and IM data) with the mobile communication devices **103.** In some embodiments, communications between the wireless connector system **120** and the mobile communication devices **103** are encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some embodiments, the private encryption key is stored only in the user's mailbox on the messaging server **132** and on the mobile communication device **103,** and can typically be regenerated by the user on mobile communication devices **103.** Data sent to the mobile communication devices **103** is encrypted by the wireless connector system **120** using the private encryption key retrieved from the user's mailbox. The encrypted data, when received on the mobile communication devices **103,** is decrypted using the private encryption key stored in memory. Similarly, data sent to the wireless connector system **120** from the mobile communication devices **103** is encrypted using the private encryption key stored in the memory of the mobile communication device **103.** The encrypted data, when received on the wireless connector system **120,** is decrypted using the private encryption key retrieved from the user's mailbox.

The wireless network gateway **110** is adapted to send data packets received from the mobile communication device **103** over the WWAN **102** to the wireless connector system **120.** The wireless connector system **120** then sends the data packets to the appropriate connection point such as the messaging server **132** or content servers **134** or application server **136.** Conversely, the wireless connector system **120** sends data packets received, for example, from the messaging server **132** or content servers **134** or application servers **136** to the wireless network gateway **110** that then transmit the data packets to the destination mobile communication device **103.** The AP interfaces **116** of the WLAN **104** provide similar sending functions between the mobile communication device **103,** the wireless connector system **120** and network connection point such as the messaging server **132,** content server **134** and application server **136.**

The network **124** may comprise a private local area network, metropolitan area network, wide area network, the public Internet or combinations thereof and may include virtual networks constructed using any of these, alone, or in combination. A mobile communication device **103** may alternatively connect to the wireless connector system **120** using a computer **117,** such as desktop or notebook computer, via the network **124.** A link **106** may be provided for exchanging information between the mobile communication device **103** and a computer **117** connected to the wireless connector system **120.** The link **106** may comprise one or both of a physical interface and short-range wireless communication interface. The physical interface may comprise one or combinations of an Ethernet connection, Universal Serial Bus (USB) connection, Firewire^{™} (also known as an IEEE 1394 interface) connection, or other serial data connection, via respective ports or interfaces of the mobile communication device **103** and computer **117.** The short-range wireless communication interface may be a personal area network (PAN) interface. A Personal Area Network is a wireless point-to-point connection meaning no physical cables are used to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the BLUETOOTH special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communication devices **103.** Suitable variations of the communication system will be understood to a person of skill in the art and are intended to fall within the scope of the present disclosure.

Online advertising can use the Internet and World Wide Web to deliver marketing messages to potential customers, e.g., via mobile devices **103.** Examples of online advertising include contextual ads on search engine results pages, banner ads, rich media Ads, social network advertising, interstitial ads, online classified advertising, advertising networks and e-mail marketing, including e-mail spam. A floating advertisement ("ad") is an ad that moves across the device screen or floats above the content displayed on the screen. An expanding changes size and may alter the contents of the webpage. A polite ad can be downloaded in smaller pieces to minimize the disruption of the content being viewed. A wallpaper ad can change the background of the page being viewed. Pop-up ads appear in a window that opens in front of the current window, displaying an advertisement, or entire webpage. Pop-under ads are similar to a pop-up except that the window is loaded or sent behind the current window so that the window is not displayed as the active window. Video ads are similar to a banner ad, except that instead of a static or animated image, video clips are displayed. This is the kind of advertising most prominent in television, and advertisers will use the same content for both television and online advertising. In map ads, ads appear in or over, a location on an electronic map such as on Google Maps^{™} mapping service. An interstitial ad can be a full-page ad that appears before a browser loads an original destination. Mobile ads can be an SMS text or multi-media message sent to a cell phone, or any of the other type of ads.

Marketing on mobile communications devices has been enabled, in part, by SMS (Short Message Service). The IAB (Interactive Advertising Bureau), and the Mobile Marketing Association as well, have established guidelines and are evangelizing the use of the mobile channel for marketers. One criterion for provisioning an SMS ad campaign is that the consumer opts in to the service. Mobile system operators may demand a double opt in from the consumer and the ability for the consumer to opt out of the service at any time by sending the word STOP via SMS. These guidelines are established in the MMA Consumer Best Practices Guidelines which are followed by some mobile marketers in the United States.

MMS mobile marketing can contain a timed slideshow of images, text, audio and video. This mobile content is delivered via MMS (Multimedia Message Service). Nearly all new communication devices produced with a color screen are capable of sending and receiving standard MMS message. Brands are able to both send (mobile terminated) and receive (mobile originated) rich content through MMS A2P (application-to-person) mobile networks to mobile subscribers. In some networks, brands are also able to sponsor messages that are sent P2P (person-to-person). Some advertisers deliver ads within mobile games or sponsoring entire games to drive consumer engagement, e.g., . This is known as mobile advergaming or ad-funded mobile game, e.g., Orbitz^{®} travel services on-line games.

Mobile marketing may also take advantage of short-range technologies, such as Bluetooth^{®} technologies and infrared to present location-based advertisements. More broadly location-based services (LBS) can be offered on mobile communications device networks as a way to send custom advertising and other information to subscribers based on their current location. The provider can obtain device location from a GPS chip built into the device, or using radiolocation and trilateration based on the signal-strength of the closest cell-phone towers. Further mobile WiMAX technology can be utilized to give a location-specific ad content to a communications device. Mobile marketing can be between a BS (Base Station) and a multitude of CPE (Consumer Premise Equipment) mounted on vehicle dashtops. Whenever vehicles come within the effective range of the BS, the dashtop CPE with LCD touchscreen loads up a set of icons or banners of individually different shapes that can be activated by finger touches or voice tags. On the screen, a frame of five (5) to seven (7) icons or banners is offered to choose from, and the frame rotates one after another.

Mobile marketing differs from most other forms of marketing communication in that it can be more likely user-initiated (mobile originated, or MO) message, and can require the consent of the consumer to receive future communications. A call delivered from a server (business) to a user (consumer) is called a mobile terminated (MT) message. Due to the demands for more user controlled media, mobile messaging infrastructure providers have responded by developing architectures that offer applications to operators with more freedom for the users, as opposed to the network-controlled media.

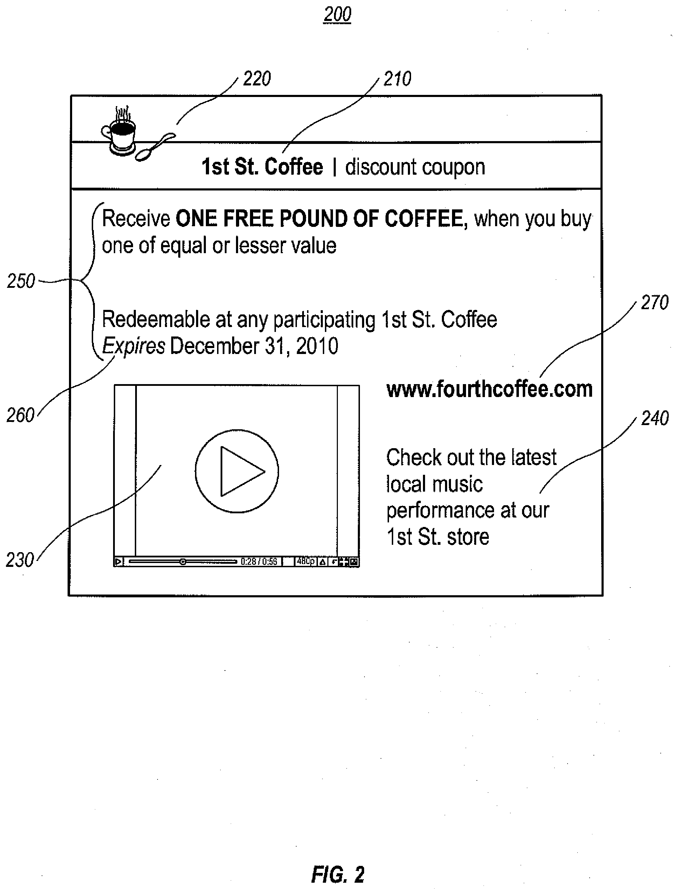

Referring to FIG. 2, an individual ad **200** can contain media as text **210,** images **220,** video **230,** data **240,** and metadata (not shown). Any of the media can contain information relevant to advertisement subject, terms of an offer **250** (including date of expiration) **260,** and hyperlinks **270.** For example, the text **210** describes the advertisement subject as "1^{st} St. Coffee," the terms of the offer including "Receive ONE FREE POUND OsF COFFEE, when you buy one of equal or lesser value," with an expiration date of "December 31, 2004." Using encoding such as extended-HTML (HyperText Markup Language) or XML (eXtensible Markup Language), the present technology can tag information such as date of expiration and terms. For example, the source code and Java^{®} script of the ad of FIG 2 can include "<expiration date>2004/12/31</expiration date>."

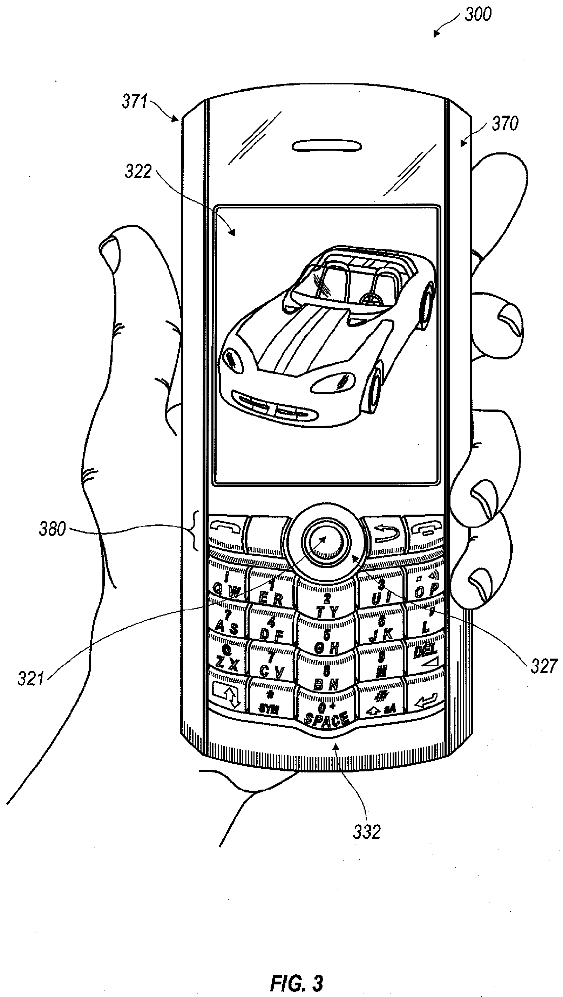

As may be appreciated from FIG. 3, an exemplary mobile communication device **300** (as an example of **103)** comprises a display **322** located above a keyboard **332** constituting a user input means and suitable for accommodating textual input to the device **300.** In some embodiments, the keyboard **332** can be part of a touch screen display. The front face 370 of the device **300** has a navigation row 380. As shown, the device **300** is of uni-body construction, also known as a "candy-bar" design.

The device **300** may include an auxiliary input that acts as a cursor navigation tool 327 and that may be also exteriorly located upon the front face 370 of the device **300.** Its front face location allows the tool to be thumb-actuable, e.g., like the keys of the keyboard **332.** Some embodiments provide the navigation tool 327 in the form of a trackball **321** that may be utilized to instruct two-dimensional screen cursor movement in substantially any direction, as well as act as an actuator when the trackball **321** is depressed like a button. Other embodiments can provide the navigation tool in the form of a trackpad, a touchpad, a pointing stick, joystick, graphics tablet, or combinations thereof. The placement of the navigation tool 327 may be above the keyboard **332** and below the display screen **322;** here, it may avoid interference during keyboarding and does not block the operator's view of the display screen **322** during use.

The device **300** may be configured to send and receive messages. The device **300** includes a body 371 that may, in some embodiments, be configured to be held in one hand by an operator of the device **300** during text entry. A display **322** is included that is located on a front face 370 of the body 371 and upon which information is displayed to the operator, e.g., during text entry. The device **300** may also be configured to send and receive voice communications such as mobile telephone calls. The device **300** also can include a camera (not shown) to allow the device **300** to take electronic photographs that can be referred to as photos or pictures. Further, the device **300** can be configured to operate a web browser.

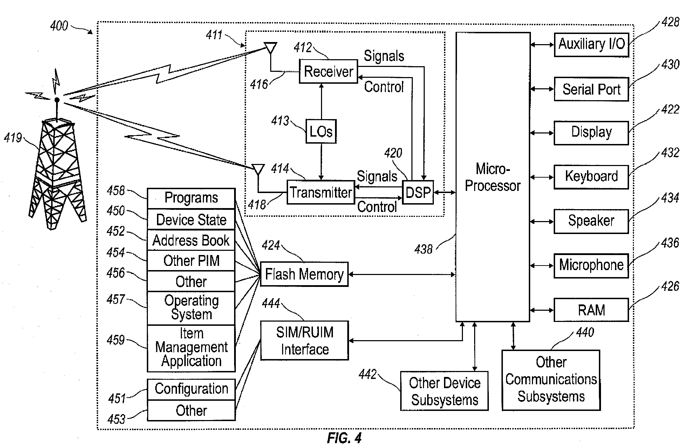

Referring to FIG. 4, a block diagram of a communication device, such as **300** and **103,** in accordance with an exemplary embodiment is illustrated. As shown, the device **400** includes a microprocessor **438** that controls the operation of the communication device **400.** A communication subsystem **411** performs communication transmission and reception with the wireless network **419.** The microprocessor **438** further can be communicatively coupled with an auxiliary input/output (I/O) subsystem **428** that can be communicatively coupled to the communication device **400.** In at least one embodiment, the microprocessor **438** can be communicatively coupled to a serial port (for example, a Universal Serial Bus port) **430** that can allow for communication with other devices or systems via the serial port **430.** A display **422** (e.g., **322)** can be communicatively coupled to microprocessor **438** to allow for displaying of information to an operator of the communication device **400.** When the communication device **400** is equipped with a keyboard **432** (e.g., **332),** the keyboard can also be communicatively coupled with the microprocessor **438.** The communication device **400** can include a speaker **434,** a microphone **436,** random access memory (RAM) **426,** and flash memory **424** all of which may be communicatively coupled to the microprocessor **438.** Other similar components may be provided on the communication device **400** as well and optionally communicatively coupled to the microprocessor **438.** Other communication subsystems **440** and other communication device subsystems **442** are generally indicated as being functionally connected with the microprocessor **438** as well. An example of a communication subsystem **440** is a short range communication system such as BLUETOOTH^{®} communication module or a WI-FI^{®} communication module (a communication module in compliance with IEEE 802.11b) and associated circuits and components. Additionally, the microprocessor **438** is able to perform operating system functions and enables execution of programs on the communication device **400.** In some embodiments not all of the above components may be included in the communication device **400.** For example, in at least one embodiment the keyboard **432** is not provided as a separate component and is instead integrated with a touch screen as described below.

The auxiliary I/O subsystem **428** can take the form of a variety of different navigation tools (multi-directional or single-directional) such as a trackball navigation tool **321** as illustrated in the exemplary embodiment shown in FIG. 3, or a thumbwheel, a navigation pad, a joystick, touch-sensitive interface, or other I/O interface. These navigation tools may be located on the front surface of the communication device **400** or may be located on any exterior surface of the communication device **400.** Other auxiliary I/O subsystems may include external display devices and externally connected keyboards (not shown). While the above examples have been provided in relation to the auxiliary I/O subsystem **428,** other subsystems capable of providing input or receiving output from the communication device **400** are considered within the scope of this disclosure. Additionally, other keys may be placed along the side of the communication device **300** to function as escape keys, volume control keys, scrolling keys, power switches, or user programmable keys, and may likewise be programmed accordingly.

The keyboard **432** can include a plurality of keys that can be of a physical nature such as actuable buttons, or they can be of a software nature, typically constituted by representations of physical keys on a display screen **422** (referred to herein as "virtual keys"). It is also contemplated that the user input can be provided as a combination of the two types of keys. Each key of the plurality of keys is associated with at least one action which can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display screen **422,** which in one embodiment is enabled by touching the display screen **422,** for example, with a stylus, finger, or other pointer, to generate the character or activate the indicated command or function. Some examples of display screens **422** capable of detecting a touch include resistive, capacitive, projected capacitive, infrared and surface acoustic wave (SAW) touch screens.

Physical and virtual keys can be combined in many different ways as appreciated by those skilled in the art. In one embodiment, physical and virtual keys are combined such that the plurality of enabled keys for a particular program or feature of the communication device **400** is shown on the display screen **422** in the same configuration as the physical keys. Using this configuration, the operator can select the appropriate physical key corresponding to what is shown on the display screen **422.** Thus, the desired character, command or function is obtained by depressing the physical key corresponding to the character, command or function displayed at a corresponding position on the display screen **422,** rather than touching the display screen **422.**

Furthermore, the communication device, e.g. **400** is equipped with components to enable operation of various programs, as shown in FIG. 4. In an exemplary embodiment, the flash memory **424** is enabled to provide a storage location for the operating system **457,** device programs **458,** and data. The operating system **457** is generally configured to manage other programs **458** that are also stored in memory **424** and executable on the processor **438.** The operating system **457** honors requests for services made by programs **458** through predefined program **458** interfaces. More specifically, the operating system **457** typically determines the order in which multiple programs **458** are executed on the processor **438** and the execution time allotted for each program **458,** manages the sharing of memory **424** among multiple programs **458,** handles input and output to and from other device subsystems **442,** and so on. In addition, operators can typically interact directly with the operating system **457** through a user interface usually including the keyboard **432** and display screen **422.** While in an exemplary embodiment the operating system **457** is stored in flash memory **424,** the operating system **457** in other embodiments is stored in read-only memory (ROM) or similar storage element (not shown). As those skilled in the art will appreciate, the operating system **457,** device program **458** or parts thereof may be loaded in RAM **426** or other volatile memory.

In some embodiments, the flash memory **424** may contain programs **458** for execution on the device **400,** including - but not limited to - an address book **452,** a personal information manager (PIM) **454,** and a device state **450.** Furthermore, programs **458** and other information **456** including data can be segregated upon storage in the flash memory **424** of the device **400.**

When the communication device **400** is enabled for two-way communication within the wireless communication network **419,** it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device **400** may use a unique identifier to enable the communication device **400** to transmit and receive signals from the communication network **419.** Other systems may not use such identifying information. GPRS, UMTS, and EDGE use a Subscriber Identity Module (SIM) in order to allow communication with the communication network **419.** Likewise, most CDMA systems use a Removable User Identity Module (RUIM) in order to communicate with the CDMA network. The RUIM and SIM card can be used in multiple different communication devices **400.** The communication device **400** may be able to operate some features without a SIM/RUIM card, but it will not be able to communicate with the network **419.** A SIM/RUIM interface **444** located within the communication device **400** allows for removal or insertion of a SIM/RUIM card (not shown). The SIM/RUIM card features memory and holds key configurations **451,** and other information **453** such as identification and subscriber related information. With a properly enabled communication device **400,** two-way communication between the communication device **400** and communication network **419** is possible.

If the communication device **400** is enabled as described above or the communication network **419** does not use such enablement, the two-way communication enabled communication device **400** is able to both transmit and receive information from the communication network **419.** The transfer of communication can be from the communication device **400** or to the communication device **400.** In order to communicate with the communication network **419,** the device **400** can be equipped with an integral or internal antenna **418** for transmitting signals to the communication network **419.** Likewise the device **400** can be equipped with another antenna **416** for receiving communication from the communication network **419.** These antennae **(416, 418)** in another exemplary embodiment are combined into a single antenna (not shown). As one skilled in the art would appreciate, the antenna or antennae **(416, 418)** in another embodiment can be externally mounted on the communication device **400.**

When equipped for two-way communication, the communication device **400** features a communication subsystem **411.** As is understood in the art, this communication subsystem **411** is modified so that it can support the operational needs of the communication device **400.** The subsystem **411** includes a transmitter **414** and receiver **412** including the associated antenna or antennae **(416, 418)** as described above, local oscillators (LOs) **413,** and a processing module that in the presently described exemplary embodiment is a digital signal processor (DSP) **420.**

It is contemplated that communication by the communication device **400** with the wireless network **419** can be any type of communication that both the wireless network **419** and communication device **400** are enabled to transmit, receive and process. In general, these can be classified as voice and data. Voice communication generally refers to communication in which signals for audible sounds are transmitted by the communication device **400** through the communication network **419.** Data generally refers to all other types of communication that the communication device **400** is capable of performing within the constraints of the wireless network **419.**

Example device programs that can depend on such data include email, contacts and calendars. For each such program, synchronization with home-based versions of the program can be desirable for either or both of their long term and short term utility. As an example, emails are often time-sensitive, so substantially real time (or near-real time) synchronization may be desired. Contacts, on the other hand, can be usually updated less frequently without inconvenience. Therefore, the utility of the communication device **400** is enhanced when connectable within a communication system, and when connectable on a wireless basis in a network **419** in which voice, text messaging, and other data transfer are accommodated. Device **400** can include programs such as a web browser, a file browser, and client programs for interacting with server programs. Devices, e.g., **103, 300, 400,** for use in the technology can be characterized by an identification number assigned to the device. Such identification numbers cannot be changed and are locked to each device.

At times, a user may see an online advertisement of interest displayed on a device **103,** but not have the time, or the desire, to follow up on the advertisement (or on an offer contained therein) immediately. Embodiments of the present technology enable re-serving of advertisements wherein the time to re-serve can be a function of at least ad content, such as an offer expiration date.

Embodiments of the technology can be implemented as programming across the architectural elements identified in FIG. 1, FIG. 3, and FIG. 4. In some embodiments, the programming is implemented entirely on the mobile communications device **103.** In some embodiments, programming for selection of ads to be re-served, and determination of re-serve conditions, are implemented on the mobile communications device **103,** while ad storage is implemented on the wireless connector system **120** or a network server such as content server **134,** messaging server **132,** or application server **136.** In some embodiments, ad storage can be implemented on an ad server, e.g., the original ad server. In embodiments where ads are stored off the mobile communications device, efficiencies can be obtained through strategies such as storing a unique ad once upon first selection so that the ad is available to each user of the enterprise that subsequently selects the ad for re-serve. Allocation of functionality among architectural elements can be a function of several factors including latency, processing resource availability and efficient usage, storage availability and efficient usage, and revenue opportunities.

Referring to FIG. 5, methods **500** of the technology are illustrated. The technology can present an opportunity to a user to select an ad to be re-served **510.** The opportunity can be presented in various ways known to those of skill in the art for soliciting user input. For example, the technology can present a selection opportunity when a cursor is positioned over a displayed ad; when a cursor is positioned over an ad and a navigation device is activated (e,g., by pressing a trackball, by double-tapping a touchpad); when an ad is selected through tabbing and a menu button is depressed; and combinations thereof.

The technology can receive a selection of an ad to re-serve **520.**

Upon selection, the technology can determine re-serve conditions for the ad **530.** Re-serve conditions can be solicited from a user at the time of selection, can be based on predetermined criteria (e.g., set by a user or otherwise), determined from the content of the ad, and combinations thereof. A re-serve event can be a time or other circumstances. For example, serving an ad for a similar product, e.g., a car, can be a re-serve event for a selected car ad. For further example, receiving notice of an account balance above a price listed in the ad can be a re-serve event. A re-serve event can be determined from an offer expiration date contained in a selected ad, e.g., the ad of FIG 2 contains an expiration date of "December 31, 2004." A re-serve events for that ad can be one (1) week prior to December 31, 2004, one (1) day prior to December 31, 2004, and on December 31, 2004.

Where one or more re-serve events are to be determined from the ad, the technology analyzes the ad for such reserve events, and can suggest such events to a user for selection as a re-serve event. For example, the technology can parse the source code of the ad of FIG. 2 to identify "<expiration date>December 31, 2004</expiration date>." The technology can then set the expiration date, or some time before the expiration date, as a re-serve event. The technology can present December 31, 2004 and other earlier dates as potential re-serve dates and receive selection of one or more.

Embodiments of the technology make the ad available for re-serve **540.** An ad can be made available for re-server in various ways depending on factors such as available processing resources, memory resources, latency restrictions, privacy concerns, and opportunity for revenue generation. For example, given sufficient memory and processing resources on the mobile device **103,** a selected ad can be stored on the mobile device. Ass another example, the ad can be stored on the enterprise network **124** (e.g., in a content server **134).** In some embodiments, a pointer for the ad is stored on the device **103** (or on the enterprise network **124)** and the ad remains at the ad server, or at a server elsewhere on the Internet. Storing the ad on the device **103** offers greater privacy to a device user, while storing ads centrally on the enterprise network **124** or on the original server of the ad offers advantages in efficiency, since one copy of the ad can be stored for many users; and each user can access the stored ad for re-serve using a pointer stored on the mobile device **103.**

Upon the occurrence of a re-serve event, embodiments of the technology re-serve the selected ad **550.** In some embodiments, the technology presents an indication that the ad is a reserved ad. In some embodiments, the technology presents an indication of the re-serve event that prompted re-serve of the ad, e.g., "expiration date in *<# days>."*

Variations on the methods include re-determining re-serve events after a re-serve; informing the ad server that the ad was viewed, informing the ad server that the ad was selected for re-serve, and informing the ad server of the re-serve conditions. Informing an ad server of viewing, selection for re-serve, and re-server conditions can be of benefit to the advertiser as indications of interest in the goods or services that are the subject of the ad.

In some embodiments, management of ads by a user can be through an ad management console computer program. In such embodiments, the console can present a user with options to manage ads, e.g., create, view, edit, and save re-serve conditions of an ad and groups of ads; request an ad outside the re-serve loop.

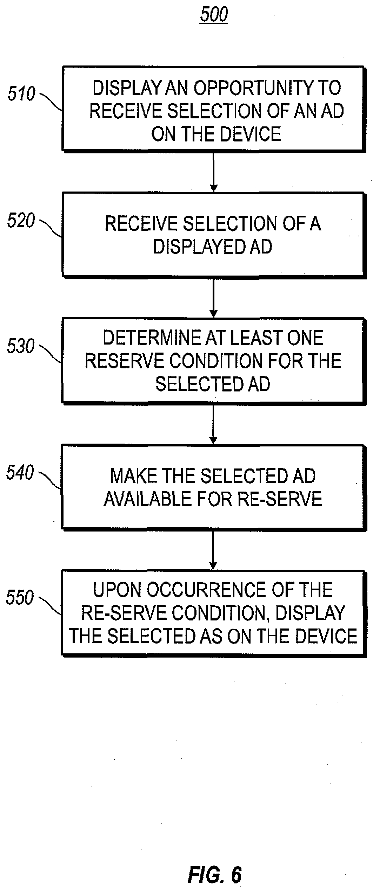

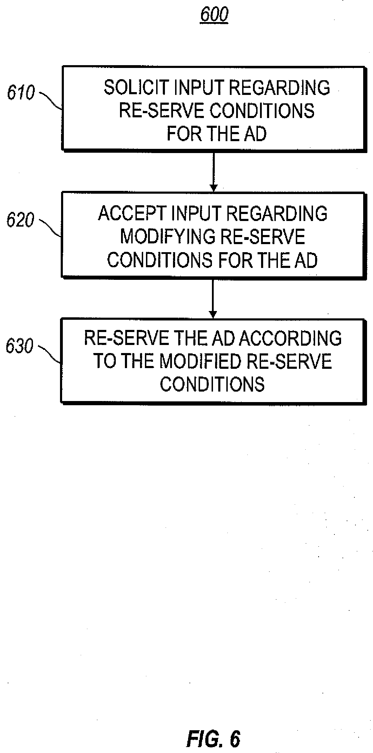

Referring to FIG. 6, further methods **600** of the technology are shown. Whether through an ad management console, or by other procedures (such as upon selecting an ad by right-clicking on the ad when it is displayed), the technology can solicit input regarding re-serve conditions for an ad **610.** In those embodiments, the technology accepts **620** input that can modify, or even revoke, re-server condition for the ad. These embodiments then re-serve the ad according to the modified conditions **630.**

In various embodiments of the technology, ads can pulled from an ad server by a device 103, pushed from an ad server to a device 103, or a combination of both. In some embodiments, an ad can be requested, e.g., by a user, outside of the re-serve loop. In various embodiments of the technology ads can be re-served in the application in which an ad was earlier served, in the ad management console, and in other applications that serve ads in a format compatible to the format in which the ad was earlier served (e.g., both having ads served.

The technology can take the forms of hardware, software or both hardware and software elements. In some embodiments, the technology is implemented in software, which includes but is not limited to firmware, resident software, microcode, a Field Programmable Gate Array (FPGA) or Applicatio n-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some embodiments, the data processing system is implemented using one or both of FPGAs and ASICs.

## Claims

1. A computer-implemented method (500) for advertising on a communication device (400), the method comprising:
displaying (510), on the communication device, an opportunity to receive selection of a displayed advertisement, ad;
receiving (520) selection of the displayed ad;
determining (530) a first re-serve condition for the selected ad, including parsing the source code of the selected ad;
displaying an opportunity to receive specification of a second re-serve condition for the selected ad from a user of the communication device (400);
receiving specification of the second re-serve condition for the selected ad;
making (540) the selected ad available for re-serve; and
upon occurrence of the first and second re-serve conditions, re-displaying (550) the selected ad on the device;
wherein the method further comprises:
soliciting (610) a user input regarding re-serve conditions for the selected ad;
receiving (620) a user input that can modify or revoke at least one of the first and second re-serve conditions for the selected ad; and
re-serving (630) the selected ad according to the modification or revocation of the at least one of the first and second conditions.

2. The computer-implemented method of Claim 1, wherein determining (530) the first re-serve condition comprises:
determining, by said parsing the source code of the selected ad, an expiration date of an offer in the selected ad, and
establishing a time prior to the determined expiration date as the first re-serve condition.

3. The computer-implemented method of Claim 1, wherein making the selected ad available (540) for re-serve comprises:
storing the selected ad on the communication device.

4. The computer-implemented method of Claim 1, wherein making the selected ad available (540) for re-serve comprises:
storing the selected ad off the communication device; and
storing a pointer to the stored ad on the communication device.

5. The computer-implemented method of Claim 1, further comprising:
after re-displaying the selected ad, determining at least one subsequent re-serve condition for the selected ad;
making the selected ad available for re-serve; and
upon occurrence of at least one determined subsequent re-serve condition, re-displaying the selected ad on the communication device.

6. A mobile communication device (400), comprising:
at least one processor (438),
at least one computer readable medium (424) in communication with the processor; and
at least one program module, stored on the at least one medium, and operable, upon execution by the processor, for performing a method according to any of the preceding claims.

## Patentansprüche

1. Ein computerimplementiertes Verfahren (500) für Werbung auf einer Kommunikationsvorrichtung (400), wobei das Verfahren Folgendes beinhaltet:
Anzeigen (510), auf der Kommunikationsvorrichtung, einer Möglichkeit zum Empfangen einer Auswahl einer angezeigten Werbeannonce, Annonce;
Empfangen (520) der Auswahl der angezeigten Annonce;
Bestimmen (530) einer ersten Bedingung für ein erneutes Darbieten der ausgewählten Annonce, umfassend das Parsen des Quellcodes der ausgewählten Annonce;
Anzeigen einer Möglichkeit zum Empfangen einer Spezifikation einer zweiten Bedingung für ein erneutes Darbieten der ausgewählten Annonce von einem Benutzer der Kommunikationsvorrichtung (400);
Empfangen der Spezifikation der zweiten Bedingung für ein erneutes Darbieten der ausgewählten Annonce;
Bereitstellen (540) der ausgewählten Annonce für ein erneutes Darbieten; und
bei Eintreten der ersten und der zweiten Bedingung für ein erneutes Darbieten, erneutes Anzeigen (550) der ausgewählten Annonce auf der Vorrichtung;
wobei das Verfahren ferner Folgendes beinhaltet:
Anfordern (610) einer Benutzereingabe in Bezug auf Bedingungen für ein erneutes Darbieten der ausgewählten Annonce;
Empfangen (620) einer Benutzereingabe, die mindestens eine von der ersten und der zweiten Bedingung für ein erneutes Darbieten der ausgewählten Annonce modifizieren oder zurücknehmen kann; und
erneutes Darbieten (630) der ausgewählten Annonce gemäß der Modifizierung oder Zurücknahme der mindestens einen von der ersten und der zweiten Bedingung.

2. Computerimplementiertes Verfahren gemäß Anspruch 1, wobei das Bestimmen (530) der ersten Bedingung für ein erneutes Darbieten Folgendes beinhaltet:
Bestimmen, durch das Parsen des Quellcodes der ausgewählten Annonce, eines Ablaufdatums eines Angebots in der ausgewählten Annonce und
Festlegen eines Zeitpunkts vor dem bestimmten Ablaufdatum als die erste Bedingung für ein erneutes Darbieten.

3. Computerimplementiertes Verfahren gemäß Anspruch 1, wobei das Bereitstellen (540) der ausgewählten Annonce für ein erneutes Darbieten Folgendes beinhaltet:
Speichern der ausgewählten Annonce auf der Kommunikationsvorrichtung.

4. Computerimplementiertes Verfahren gemäß Anspruch 1, wobei das Bereitstellen (540) der ausgewählten Annonce für ein erneutes Darbieten Folgendes beinhaltet:
Speichern der ausgewählten Annonce außerhalb der Kommunikationsvorrichtung; und
Speichern eines Zeigers auf die gespeicherte Annonce auf der Kommunikationsvorrichtung.

5. Computerimplementiertes Verfahren gemäß Anspruch 1, ferner beinhaltend:
nach dem erneuten Anzeigen der ausgewählten Annonce, Bestimmen mindestens einer nachfolgenden Bedingung für ein erneutes Darbieten der ausgewählten Annonce;
Bereitstellen der ausgewählten Annonce für ein erneutes Darbieten; und
bei Eintreten mindestens einer bestimmten nachfolgenden Bedingung für ein erneutes Darbieten, erneutes Anzeigen der ausgewählten Annonce auf der Kommunikationsvorrichtung.

6. Eine mobile Kommunikationsvorrichtung (400), beinhaltend:
mindestens einen Prozessor (438),
mindestens ein computerlesbares Medium (424) in Kommunikation mit dem Prozessor; und
mindestens ein Programmmodul, das auf dem mindestens einen Medium gespeichert ist und bei Ausführung durch den Prozessor betriebsfähig ist, ein Verfahren gemäß einem der vorhergehenden Ansprüche durchzuführen.

## Revendications

1. Un procédé mis en œuvre par ordinateur (500) pour faire de la publicité sur un dispositif de communication (400), le procédé comprenant :
l'affichage (510), sur le dispositif de communication, d'une possibilité de recevoir une sélection d'une annonce publicitaire affichée, une publicité ;
la réception (520) d'une sélection de la publicité affichée ;
la détermination (530) d'une première condition de ré-émission pour la publicité sélectionnée, incluant l'analyse syntaxique du code source de la publicité sélectionnée ;
l'affichage d'une possibilité de recevoir une spécification d'une deuxième condition de ré-émission pour la publicité sélectionnée en provenance d'un utilisateur du dispositif de communication (400) ;
la réception d'une spécification de la deuxième condition de ré-émission pour la publicité sélectionnée ;
la mise à disposition (540) de la publicité sélectionnée pour ré-émission ; et
lors de l'occurrence des première et deuxième conditions de ré-émission, le réaffichage (550) de la publicité sélectionnée sur le dispositif ;
où le procédé comprend en outre :
la sollicitation (610) d'une saisie utilisateur concernant des conditions de ré-émission pour la publicité sélectionnée ;
la réception (620) d'une saisie utilisateur qui peut modifier ou révoquer au moins l'une des première et deuxième conditions de ré-émission pour la publicité sélectionnée ; et
la ré-émission (630) de la publicité sélectionnée selon la modification ou la révocation de l'au moins une des première et deuxième conditions.

2. Le procédé mis en œuvre par ordinateur de la revendication 1, où la détermination (530) de la première condition de ré-émission comprend :
la détermination, par ladite analyse syntaxique du code source de la publicité sélectionnée, d'une date d'expiration d'une offre dans la publicité sélectionnée, et
l'établissement d'un temps avant la date d'expiration déterminée en tant que première condition de ré-émission.

3. Le procédé mis en œuvre par ordinateur de la revendication 1, où la mise à disposition (540) de la publicité sélectionnée pour ré-émission comprend :
le stockage de la publicité sélectionnée sur le dispositif de communication.

4. Le procédé mis en œuvre par ordinateur de la revendication 1, où la mise à disposition (540) de la publicité sélectionnée pour ré-émission comprend :
le stockage de la publicité sélectionnée en dehors du dispositif de communication ; et
le stockage d'un pointeur assigné à la publicité stockée sur le dispositif de communication.

5. Le procédé mis en œuvre par ordinateur de la revendication 1, comprenant en outre :
après le réaffichage de la publicité sélectionnée, la détermination d'au moins une condition de ré-émission subséquente pour la publicité sélectionnée ;
la mise à disposition de la publicité sélectionnée pour ré-émission ; et
lors de l'occurrence d'au moins une condition de ré-émission subséquente déterminée, le réaffichage de la publicité sélectionnée sur le dispositif de communication.

6. Un dispositif de communication mobile (400), comprenant :
au moins un processeur (438),
au moins un support lisible par ordinateur (424) en communication avec le processeur ; et
au moins un module de programme, stocké sur l'au moins un support, et exploitable, lors de l'exécution par le processeur, pour effectuer un procédé selon n'importe lesquelles des revendications précédentes.
